# EUROPÄISCHE PATENTSCHRIFT

(11) **EP 2 708 415 B1**
(45) Veröffentlichungstag und Bekanntmachung des Hinweises auf die Patenterteilung: **15.01.2020**
(21) Anmeldenummer: 13004468.8
(22) Anmeldetag: 13.09.2013
(51) Int. Cl.: B60P 7/08, B62D 25/20, B60R 13/01

(54) **Befestigungssystem zur Festlegung einer Zusatzbodenplatte am Originalladeboden eines Fahrzeuges und zur Verzurrung von Ladung**
Fastening system for fixing an additional floor plate to the original loading floor of a vehicle and for lashing loads
Système de fixation pour la fixation d'une plaque de plancher supplémentaire sur le plancher de chargement d'origine d'un véhicule et pour l'arrimage du chargement

(30) Priorität: 14.09.2012 DE 102012018165
(43) Veröffentlichungstag der Anmeldung: 19.03.2014
(73) Patentinhaber: Blomberger Holzindustrie GmbH, 32825 Blomberg (DE)
(72) Erfinder: Krampe, Bernd Peter, 45731 Waltrop (DE); Bentler,Reinhold, 33104 Paderborn (DE)
(74) Vertreter: Brandt, Detlef

(56) Entgegenhaltungen:
- EP-A2- 1 193 165
- DE-A1- 10 057 577
- DE-A1- 10 233 419
- DE-A1-102011 012 526
- DE-U1-202004 014 514

## Beschreibung

### Technisches Umfeld

Die Erfindung betrifft ein Befestigungssystem zur Festlegung einer zum Befestigungssystem gehörenden Zusatzbodenplatte an Befestigungsgewinden im Originalladeboden eines Fahrzeuges und zur Verzurrung von Ladung mittels korrespondierender Befestigungsfittings mit einem Halteelement, welches in einer stufenförmigen Öffnung der Zusatzbodenplatte angeordnet ist, wobei die Öffnung einen ersten im Durchmesser größeren Öffnungsbereich und einen zweiten im Durchmesser kleineren Öffnungsbereich aufweist und mit einem Verschraubungselement, welches das Halteelement an einem im Originalladeboden des Fahrzeuges herstellerseitig vorhandenen Befestigungsgewinde fixiert, wobei das Halteelement einen dem Originalladeboden abgewandten scheibenförmigen Grundkörper aufweist, mit dem das Halteelement im ersten Öffnungsbereich der Zusatzbodenplatte angeordnet ist, an den sich ein nach unten zum Originalladeboden vorstehender länglicher Steg anschließt, der im zweiten Öffnungsbereich der Zusatzbodenplatte platziert ist.

### Stand der Technik

Befestigungssysteme der eingangs geschilderten gattungsgemäßen Art nach dem Oberbegriff des Anspruches 1 sind aus dem Stand der Technik in unterschiedlicher Ausgestaltung bekannt. Sie werden überall dort eingesetzt, wo PKW's oder LKW's ergänzend zu den herstellerseitig vorgesehenen Ausstattungen zusätzlich für ihren Einsatz mit formstabilen, robusten Zusatzböden ausgestattet werden müssen, die auch größerer mechanischer Beanspruchung standhalten. Benötigt werden derartige Zusatzböden beispielsweise oft bei Kleintransportern, die als Handwerkerfahrzeuge eingesetzt sind.

Typischerweise werden die Zusatzböden aus Holz, Holzverbundstoffen, Kunststoff oder Kunststoffverbundstoffen gefertigt. Zur Festlegung von Ladung innerhalb des Laderaumes werden die in Rede stehenden Fahrzeuge in aller Regel mit Befestigungsgewinden im Ladeboden versehen, in welche geeignete Befestigungsmittel wie Verzurrösen und dergleichen eingeschraubt werden können. Diese Befestigungspunkte werden im Rahmen der Betriebsabnahme für ein Fahrzeug auf ihre Belastbarkeit geprüft. Es ist daher von Vorteil, diese herstellerseitig vorgesehenen Befestigungspunkte auch dann zu nutzen, wenn das in Rede stehende Kraftfahrzeug mit einer Zusatzbodenplatte ausgestattet wird.

Es hat sich deshalb im Stand der Technik als vorteilhaft erwiesen, Befestigungssysteme zu entwickeln, die die herstellerseitig vorgesehenen Befestigungsgewinde des Originalfahrzeugbodens nutzen, um einerseits die Zusatzbodenplatten zu fixieren und andererseits eine Möglichkeit zur Festlegung von Ladung im Fahrzeug bereitzustellen. Zu diesem Zweck weisen die im Fahrzeug anzubringenden Zusatzbodenplatten Durchbrüche bzw. Öffnungen auf, die sich im Bereich der im Fahrzeug herstellerseitig vorgesehenen Befestigungsgewinde befinden. Im Bereich dieser Befestigungsgewinde wird dann ein entsprechendes Verschraubungselement zusammen mit einem Halteelement angebracht, wobei Verschraubung und Halteelement einerseits der Fixierung der Zusatzbodenplatte dienen und andererseits geeignete Haltemittel wie Verzurrösen oder dergleichen aufweisen können, die zur Festlegung der Ladung dienen.

So ist beispielsweise aus der DE 20 2004 014 514 U1 ein Befestigungssystem mit den gattungsbildenden Merkmalen des Hauptanspruches bekannt.

Die Zusatzbodenplatten werden in aller Regel mit dem Originalladeboden des Fahrzeuges fest verschraubt. In der Praxis hat es sich allerdings gezeigt, dass während des Einsatzes der Fahrzeuge die fest verschraubten Zusatzbodenplatten oftmals aufgrund ihres Materials Dimensionsänderungen infolge entsprechender Witterungsbedingungen (Winter- und Sommerbetrieb) oder auch infolge von Feuchtigkeitsbeanspruchungen unterliegen. Die Dimensionsänderungen der Zusatzbodenplatten während der beschriebenen unterschiedlichen Einsatzbedingungen sind so groß, dass die Festlegung am Originalladeboden auf die dort vorhandenen Befestigungspunkte unnötige zusätzliche Belastungen aufbringt. Darüberhinaus besteht bei aus dem Stand der Technik bekannten Befestigungssystemen die Problematik, dass bei aussermittigem Kraftangriff an zum Halteelement gehörenden Verzurrösen durch Spannseile oder dergleichen das erzeugte Drehmoment zu einem Lösen des Halteelementes und somit zu einer Beeinträchtigung der Verzurrfunktion kommen kann.

### Aufgabe der Erfindung

Aufgabe der vorliegenden Erfindung ist es daher, ein Befestigungssystem mit den angeführten gattungsbildenden Merkmalen des Anspruches 1 bereitzustellen, welches mit Hilfe der herstellerseitig vorgesehenen Befestigungspunkte eine Fixierung der Zusatzbodenplatten und die Möglichkeit der Verzurrung von Transportgut bereitstellt, wobei zusätzlich infolge der Fixierung auf die Befestigungspunkte einwirkenden Belastungen die herstellerseitig garantierten zulässigen Beanspruchungen der Befestigungsgewinde nicht herabsetzen.

### Lösung der Aufgabe

Die Beseitigung der aus dem Stand der Technik bekannten Nachteile wird erfindungsgemäß ausgehend von einer Vorrichtung mit den Merkmalen des Gattungsbegriffes des Anspruches 1 durch die Kombination mit der im kennzeichnenden Teil offenbarten technischen Lehre gelöst.

Erfindungswesentlich dabei ist es, dass zwischen der Unterseite des Grundkörpers und dem Boden des ersten Öffnungsbereiches einerseits und der Umfangsfläche des Grundkörpers und der Innenwandung des ersten Öffnungsbereiches andererseits nach der Montage des Befestigungssystems ein geringfügiger Abstand vorhanden ist.

Die spezielle Art der Befestigung ermöglicht im Gegensatz zu allen bislang bekannten Befestigungstechniken nunmehr eine geringfügige Verschieblichkeit der Zusatzbodenplatten in Bezug auf die jeweiligen Befestigungspunkte, welche im Fahrzeug herstellerseitig vorhanden sind. Somit können temperatur- oder betriebsbedingte Größenschwankungen der Zusatzbodenplatten ohne Belastung der Befestigungspunkte ausgeglichen werden, da das Material der Zusatzbodenplatten in gewissen Grenzen frei arbeiten kann.

Besondere Ausgestaltungen des Gegenstandes der Erfindung ergeben sich in Zusammenschau mit der technischen Lehre des Anspruches 1 zusätzlich aus den Merkmalen der auf den Hauptanspruch rückbezogenen Unteransprüche.

Es hat sich insbesondere als zweckmäßig erwiesen, den erfindungsgemäß vorhandenen Abstand in einen Größenbereich von 0,1 bis 1,5 mm zu legen. Die Größenordnung hängt nicht unwesentlich von dem verwendeten Material der Zusatzbodenplatten ab, da hier sowohl Birkenholz, Buchenholz oder aber Verbundwerkstoffe zum Einsatz kommen können.

Zusätzlich zweckmäßig kann es sein, wenn zwischen Verschraubungselement und Originalladeboden eine Distanzhülse angeordnet ist, deren Höhe geringfügig größer bemessen ist als ein zwischen Verschraubungselement und Originalladeboden befindlicher Befestigungsbund des Halteelementes. Diese konstruktive Ausgestaltung bewirkt, dass sich das Halteelement trotz Festlegung des Verschraubungselementes im herstellerseitig vorhandenen Befestigungsgewinde um dessen Mittelachse, in diesem Falle vorzugsweise eine in das Befestigungsgewinde eingebrachte Befestigungsschraube, frei drehen kann. Die am Halteelement angeordneten Befestigungspunkte zur Verzurrung von Ladung richten sich durch die Drehmöglichkeit generell immer so aus, dass die Einleitung eines Drehmomentes in den Befestigungspunkt nach Festlegung der Ladung vermieden wird. Hierdurch kann die werkseitig garantierte Beanspruchung der jeweiligen Befestigungspunkte am Originalladeboden besser genutzt werden.

Die Distanzhülse kann ensprechend einer zweckmäßigen Weiterbildung einstückig mit dem Befestigungselement als an einer Befestigungsschraube festgelegten Distanzbund ausgebildet werden. Dies reduziert die Bauteilanzahl des Befestigungssystems von drei auf zwei Bauteile und erleichtert die Montage und Lagerhaltung.

Als zusätzlich vorteilhaft hat es sich gezeigt, wenn die Distanzhülse einen scheibenförmigen Distanzkörper und ein sich aus dem Distanzkörper nach oben anschließendes Hülsenteil aufweist. Das Hülsenteil erleichtert die Montage, indem sie in eine korrespondierende Durchbrechung des Halteelementes eingreifen kann. Da die Originalladeböden je nach Hersteller eines Fahrzeuges üblicherweise mit sickenartigen Vertiefungen versehen sind, in denen die Befestigungspunkte angeordnet sind, kann durch unterschiedliche Dickenabmaße des an der Distanzhülse angeordneten scheibenförmigen Distanzkörpers eine Anpassung der Höhenposition des Halteelementes durchgeführt werden. Dies ist insbesondere von Vorteil, da vom Nutzer generell eine bündige Oberfläche zwischen Zusatzbodenplatte und Halteelement gewünscht ist.

Zur Festlegung von Ladung hat es sich darüber hinaus als vorteilhaft erwiesen, das Halteelement mit mindestens einem Befestigungspunkt zur Festlegung eines Befestigungsfittings gemäß den aktuell gültigen gesetzlichen Ladungssicherungsvorschriften nach beispielsweise VDI 2700, DIN/ISO 75410 und ISO 27956 auszustatten. Befestigungsfittings der geschilderten Art sind allgemein üblich und im Transportsektor jederzeit verfügbar. Sie lassen sich leicht befestigen und übertragen die vom Befestigungsgurt eingeleiteten Kräfte zuverlässig auf das Halteelement und von diesem unmittelbar über die Verschraubung in den Originalladeboden.

Je nach Größe des Halteelementes ist auch die Anordnung von mehr als einem Befestigungspunkt denkbar. Der oder die Befestigungspunkte sind dabei Bestandteil eines im Grundkörper und im Steg längs der Stegmittelachse eingebrachten hinterschnittenen Nut. Die Anordnung der Befestigungspunkte bietet aufgrund ihrer Einarbeitung im Halteelement eine praktische und optisch ansprechende Gestaltung.

Vorteilhaft kann es darüber hinaus sein, wenn zur Verschraubung des Halteelementes am Boden der Nut eine langlochförmige Ausnehmung mit zwei in der Breite unterschiedlichen Bereichen eingebracht ist, die sich bis zur Unterseite des Halteelementes erstreckt. In Verbindung mit der speziellen Ausgestaltung der Nut lässt sich durch den schmaleren Bereich der Ausnehmung der Gewindeteil der Befestigungsschraube hindurchstecken, die zur Verschraubung des Halteelementes mit dem herstellerseitig vorgesehenen Befestigungsgewinde dient. Eine Verschiebung des Halteelementes innerhalb der langlochförmigen Ausnehmung bewirkt dann in Verbindung mit der speziellen Ausgestaltung der Nut, dass die Befestigungsschraube in der Montageposition gegen Verlust formschlüssig gesichert ist.

### Figurenbeschreibung

Im Folgenden wird eine Ausgestaltung des Gegenstandes der Technik anhand der beigefügten Zeichnungen näher erläutert. Es zeigt:
- Figur 1: eine Schnittdarstellung eines Fahrzeugbodens im Bereich der Befestigung einer Zusatzbodenplatte durch das erfindungsgemäße Befestigungssystem,
- Figur 2: eine vergrößerte Schnittdarstellung des Details A aus Figur 1,
- Figur 3: eine Draufsicht auf das zum Befestigungssystem gehörende Halteelement und
- Figur 4: eine Unteransicht des Halteelementes aus Figur 3.

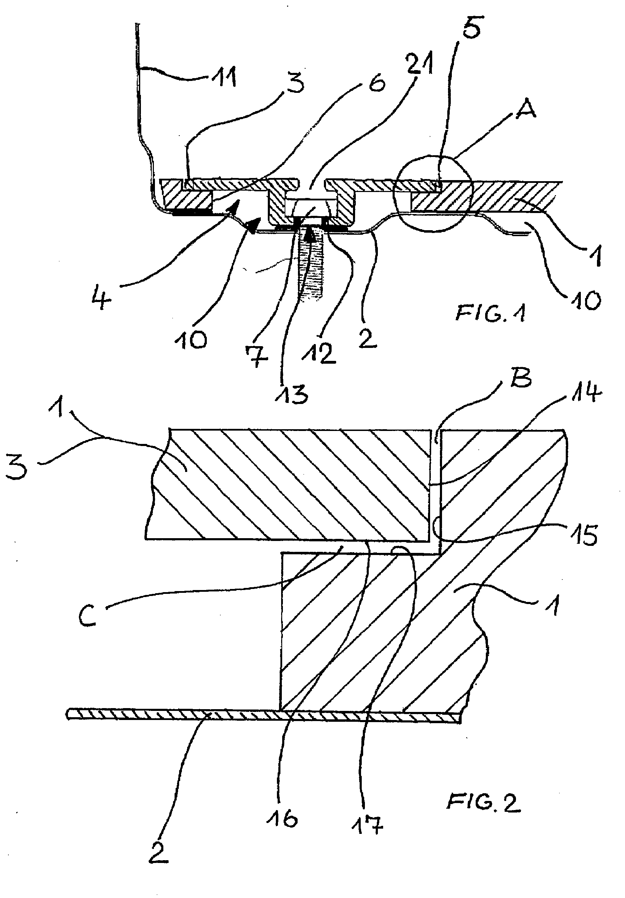

In der Darstellung der Figur 1 ist ein Originalladeboden 2 dargestellt, auf dem mittels eines erfindungsgemäßen Befestigungssystems eine Zusatzbodenplatte 1 festgelegt ist. Der Originalladeboden 2 eines Fahrzeuges, vorzugsweise eines Kleintransporters, besitzt zur Stabilisierung üblicherweise eine Reihe von nebeneinander parallel verlaufenden Sicken 10. In diesen Sicken 10 befinden sich an vom Hersteller bestimmten Orten Befestigungsgewinde, die zum Einschrauben von Verzurrösen oder dergleichen vom Hersteller vorgesehen sind. Die Haltekräfte derartiger Befestigungspunkte werden vom Fahrzeughersteller geprüft und garantiert.

In der Darstellung der Figur 1 wurde aus Gründen der Übersichtlichkeit auf die Darstellung der konstruktiven Gestaltung eines dieser Befestigungsgewinde verzichtet, da deren konstruktive Gestaltung hinlänglich bekannt ist. Aus der Darstellung geht lediglich hervor, dass ein zum erfindungsgemäßen Befestigungssystems gehörendes Verschraubungselement 7 in Form einer Imbusschraube durch eine Öffnung im Originalladeboden 2 in ein daran befindliches Befestigungsgewinde eingeschraubt ist.

Zum Befestigungssystem gehört darüber hinaus ein Halteelement 3, welches aufgrund seiner Gestaltung zur Festlegung der Zusatzbodenplatte 1 dient. Das Halteelement 3 besteht prinzipiell aus einem Grundkörper 8, der scheibenförmig ausgebildet ist und an den sich an der Unterseite, d.h. zum Originalladeboden 2 ein länglicher Steg 9 erstreckt. Der Grundkörper 8 ist in einer Öffnung 4 der Zusatzbodenplatte 1 eingesetzt. Die Öffnung 4 der Zusatzbodenplatte 1 besitzt, wie dies aus der Figur 1 deutlich wird, zwei Öffnungsbereiche 5, 6, wobei der Öffnungsbereich 5 im Querschnitt größer ausgeführt ist als der Öffnungsbereich 6.

Es ergibt sich somit eine stufenförmige Öffnung 4 innerhalb der Zusatzbodenplatte 1.

Wie bereits erwähnt, schließt sich an den Grundkörper 8 der Steg 9 an, der an seiner dem Grundkörper 8 abgewandten Unterseite mit einer Ausnehmung 13 versehen ist. In die Ausnehmung 13 ist das Verschraubungselement 7 eingesetzt. Die Dimensionierung des Halteelementes 3 ist so gewählt, dass bedingt durch dessen Höhe und dessen Durchmesser zwischen der Zusatzbodenplatte 1 und dem Grundkörper 8 des Halteelementes 3 Abstände B und C geschaffen sind, nachdem die Montage der Zusatzbodenplatte 1 mittels des erfindungsgemäßen Befestigungssystems erfolgt ist.

Der Abstand B ergibt sich dabei zwischen der Umfangsfläche 14 des Grundkörpers 8 und der Innenwandung 15 des ersten Öffnungsbereiches 5. Der Abstand C definiert sich zwischen der Unterseite 16 des Grundkörpers 8 und dem Boden 17 des ersten Öffnungsbereiches 5.

Bedingt durch die definierten Abstände B und C kann sich die Zusatzbodenplatte 1 bei Veränderung ihrer Abmaße infolge von Temperaturschwankungen oder besonderen Betriebsbedingungen (Feuchtigkeit etc.) im Bereich des Halteelementes 3 geringfügig verschieben, so dass Spannungen, wie sie bei einer aus dem Stand der Technik hinlänglich bekannten festen Fixierung der Zusatzbodenplatte 1 zwangsläufig auftreten, vermieden wird.

Aus der Figur 1 wird ergänzend deutlich, dass zwischen dem Verschraubungselement 7 und dem Originalladeboden 2 entsprechend einer vorteilhaften Weiterbildung eine Distanzhülse 12 angeordnet ist. Die Distanzhülse 12 ist in ihrer Höhe so bemessen, dass sie etwas größer ist, als die Dicke des Steges 9 im Bereich der Ausnehmung 13, durch die das Verschraubungselement 7 geführt ist. Die geschilderte konstruktive Gestaltung bewirkt, dass das Verschraubungselement 7 unter Zuhilfenahme der Distanzhülse 12 fest mit dem Originalladeboden 2 verschraubt werden kann. Gleichzeitig ist gewährleistet, dass das Halteelement 3 um die Mittelachse des Verschraubungselementes 7 drehbar ist. Diese Drehbarkeit ist natürlich zusätzlich bedingt durch die oben beschriebenen Abstände B und C.

Die Distanzhülse 12 ist so ausgestaltet, dass sie aus einem scheibenförmigen Distanzkörper 18, der zwischen Originalladeboden 2 und der Unterseite des Steges 9 angeordnet ist, sowie einem Hülsenelement 19 besteht. Das Hülsenelement 19 ist mit einem Innendurchmesser versehen, der an den Außendurchmesser des Verschraubungselementes 7 angepasst ist. Der Außendurchmesser des Hülsenelementes ist so bemessen, dass er der Ausnehmung 13 im Steg 9 des Halteelementes 3 entspricht. Da die in den Originalladeboden 2 von Fahrzeugen eingebrachten Sicken 10 bei unterschiedlichen Fahrzeugherstellern unterschiedliche Tiefen aufweisen können, kann durch Auswahl der Dicke des Distanzkörpers 18 der Distanzhülse 12 die Gesamthöhe des Befestigungssystems so gewählt werden, dass die Oberkante des Grundkörpers 8 bündig mit der Oberkante der Zusatzbodenplatte 1 abschließt.

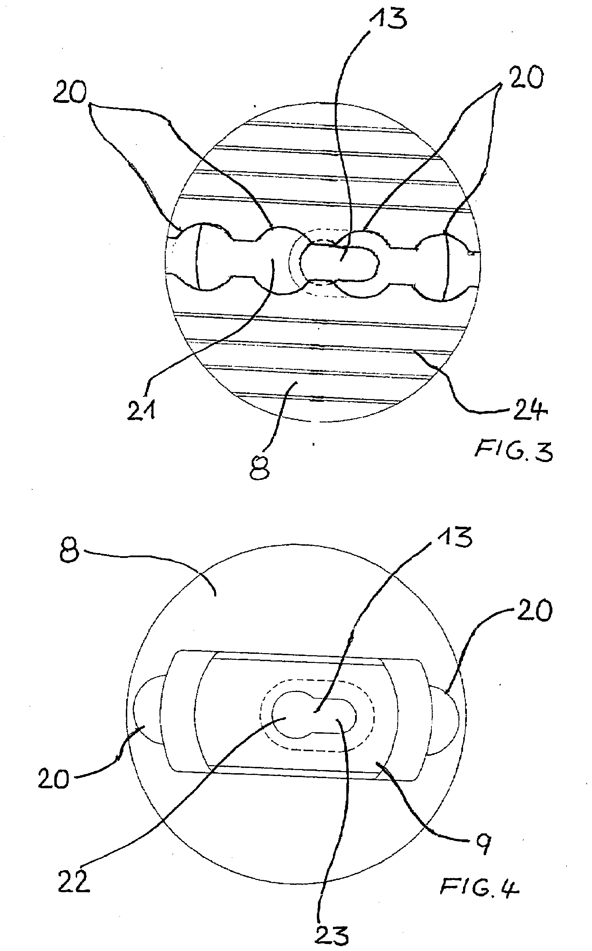

Da die Aufgabe des erfindungsgemäßen Befestigungssystems auch darin besteht, zur Verzurrung von Ladung mittels korrespondierender Befestigungsfittings zu dienen, ist das Halteelement 3 mit Befestigungspunkten 20 zur Festlegung von Befestigungsfittings beispielsweise nach VDI 2700, DIN/ISO 75410 und ISO 27956 versehen. Die Befestigungspunkte 20 sind Bestandteil einer im Grundkörper 8 und im Steg 9 längs der Stegmittelachse eingebrachten hinterschnittenen Nut 21. Der obere Öffnungsbereich der Nut 21 ist entsprechend der Darstellung der Figur 3 mit Bereichen größerer Öffnung und Bereichen kleinerer Öffnung versehen. Diese Ausgestaltung ist durch die zur Verwendung kommenden Befestigungsfittings nach VDI 2700, DIN/ISO 75410 und ISO 27956 bedingt.

Wie aus der Darstellung der Figur 3 und 4 deutlich wird, ist der an der Unterseite des Grundkörpers 8 angeordnete Steg 9 in seiner Längserstreckung geringer ausgeführt als der Durchmesser des Grundkörpers 8. Die Längserstreckung ist dabei so bemessen, dass sie kleiner ist als die Breite der Sicken 10 der üblicherweise gestalteten Originalladeböden 2. Die runde Außenkontur des Steges 9 ermöglicht dabei die problemlose Drehung des Halteelementes 3 innerhalb der Sicke 10.

Wie aus den Figuren 3 und 4 ergänzend deutlich wird, ist die Ausnehmung 13 zur Festlegung des Halteelementes 3 am Originalladeboden 2 als Langloch gestaltet. Sie weist dabei einen Bereich 22 größerer Breite und einen Bereich 23 kleinerer Breite auf. Diese Gestaltung hat den Hintergrund, dass das Verschraubungselement 7 in Form einer Befestigungsschraube mit seinem Schaft bei der Montage durch den Bereich 23 der Ausnehmung 13 hindurchgeführt und danach in den Bereich 22 der Ausnehmung 13 in die Mitte des Halteelementes 3 verschoben wird. Da sich über den Bereich 22 die Nut 21 in ihrer Breite verkleinert, ist nach der Montage des Halteelementes 3 und dem Verschieben des Verschraubungselementes 7 in die zentrale Mitte des Halteelementes 3 das Verschraubungselement 7 gegen Entnahme gesichert, auch wenn sich durch ungünstige Betriebsverhältnisse die Fixierung des Verschraubungselementes 7 am Originalladeboden 2 lösen sollte.

Selbstverständlich ist es auch denkbar, die Nut 21 in ihrer Form anders zu gestalten, so dass auch alternative Befestigungsmittel Verwendung finden können. Wie der Figur 3 ergänzend zu entnehmen ist, besitzt der Grundkörper 8 des Halteelementes 3 an seiner Oberseite linienförmige leichte Erhebungen 24, die zur Rutschhemmung dienen für den Fall, dass die Zusatzbodenplatte 1 im Bereich des Befestigungssystems feucht sein sollte.

### Bezugszeichenliste:

- 1: Zusatzbodenplatte
- 2: Originalladeboden
- 3: Halteelement
- 4: Öffnung
- 5: Öffnungsbereich
- 6: Öffnungsbereich
- 7: Verschraubungselement
- 8: Grundkörper
- 9: Steg
- 10: Sicke
- 11: Fahrzeugwandung
- 12: Distanzhülse
- 13: Ausnehmung
- 14: Umfangsfläche
- 15: Innenfläche
- 16: Unterseite
- 17: Boden
- 18: Distanzkörper
- 19: Hülsenelement
- 20: Befestigungspunkt
- 21: Nut
- 22: Bereich
- 23: Bereich
- 24: Erhebung

## Patentansprüche

1. Befestigungssystem zur Festlegung einer zum Befestigungssystem gehörenden Zusatzbodenplatte (1) an Befestigungsgewinden im Originalladeboden (2) eines Fahrzeuges und zur Verzurrung von Ladung mittels korrespondierender Befestigungsfittings mit einem Halteelement (3), welches in einer stufenförmigen Öffnung der Zusatzbodenplatte (1) angeordnet ist, wobei die Öffnung (4) einen ersten im Durchmesser größeren Öffnungsbereich (5) und einen zweiten im Durchmesser kleineren Öffnungsbereich (6) aufweist, und mit einem Verschraubungselement (7), welches dazu geeignet ist, das Halteelement (3) an einem im Originalladeboden (2) des Fahrzeuges herstellerseitig vorhandenen Befestigungsgewinde zu fixieren, wobei das Halteelement (3) im montierten Zustand einen dem Originalladeboden (2) abgewandten scheibenförmigen Grundkörper (8) aufweist, mit dem das Haltelement (3) im ersten Öffnungsbereich (5) der Zusatzbodenplatte (1) angeordnet ist, an den sich ein im montierten Zustand nach unten zum Originalladeboden (2) vorstehender länglicher Steg (9) anschließt, der im zweiten Öffnungsbereich (6) der Zusatzbodenplatte (2) platziert ist,
**dadurch gekennzeichnet, dass**
zwischen der Unterseite (16) des Grundkörpers (8) und dem Boden (17) des ersten Öffnungsbereiches (5) einerseits und der Umfangsfläche (14) des Grundkörpers (8) und der Innenfläche (15) der Seitenwandung des ersten Öffnungsbereiches (5) andererseits nach der Montage des Befestigungssystems ein geringfügiger Abstand vorhanden ist.

2. Befestigungssystem nach Anspruch 1,
**dadurch gekennzeichnet dass**
der Abstand im Bereich von 0,1 - 1,5 mm liegt

3. Befestigungssystem nach Anspruch 1,
**dadurch gekennzeichnet dass**
im montierten Zustand zwischen Verschraubungselement (7) und Originalladeboden (2) eine Distanzhülse (12) angeordnet ist, deren Höhe geringfügig größer bemessen ist als ein zwischen Verschraubungselement (7) und Originalladeboden (2) befindlicher Befestigungsbund des Halteelementes (3).

4. Befestigungssystem nach Anspruch 3,
**dadurch gekennzeichnet dass**
die Distanzhülse (12) einstückig an dem Verschraubungselement (7) als ein Distanzbund ausgebildet ist.

5. Befestigungssystem nach einem der Ansprüche 1-4,
**dadurch gekennzeichnet dass**
die Distanzhülse (12) einen scheibenförmigen Distanzkörper (18) und ein sich aus dem Distanzkörper (18) nach oben anschließendes Hülsenteil (19) aufweist.

6. Befestigungssystem nach Ansprüche 1 - 5,
**dadurch gekennzeichnet dass**
das Halteelement (3) mindestens einen Befestigungspunkt (20) zur Festlegung eines Befestigungsfittings nach VDI 2700 und /oder DIN/ISO 75410 und/oder ISO 27956 aufweist.

7. Befestigungssystem nach Anspruch 6,
**dadurch gekennzeichnet dass**
der Befestigungspunkt (20) Bestandteil eines im Grundkörper (8) und Steg (9) längs der Stegmittelachse eingebrachten hinterschnittenen Nut (21) ist.

8. Befestigungssystem nach Anspruch 7,
**dadurch gekennzeichnet dass**
am Boden der Nut (21) eine langlochförmige Ausnehmung (13) mit zwei in der Breite unterschiedlichen Bereichen (22, 23) eingebracht ist, die sich bis zur Unterseite (16) des Halteelementes (3) erstreckt.

## Claims

1. Fastening system for fixing an additional floor panel (1) belonging to the fastening system to fastening threads in the original loading floor (2) of a vehicle and for lashing loads by means of corresponding fastening fittings with a holding element (3), which is arranged in a step-shaped opening of the additional floor panel (1), wherein the opening (4) has a first opening region (5), which is larger in diameter, and a second opening region (6), which is smaller in diameter, and with a screwing element (7), which is suited for fixing the holding element (3) to a fastening thread present at the manufacturing stage in the original loading floor (2) of the vehicle, wherein the holding element (3) has, in the installed state, a disc-shaped base body (8) facing away from the original loading floor (2), with which the holding element (3) is arranged in the first opening region (5) of the additional floor panel (1), to which adjoins an elongated bar (9) protruding downwards towards the original loading floor (2) in the installed state, which is placed in the second opening region (6) of the additional floor panel (2), **characterised in that** between the underside (16) of the base body (8) and the floor (17) of the first opening region (5), on the one hand, and the circumferential surface (14) of the base body (8) and the inner surface (15) of the side wall of the first opening region (5), on the other hand, a small distance is present after the installation of the fastening system.

2. Fastening system according to claim 1, **characterised in that** the distance is in the range of 0.1 to 1.5 mm.

3. Fastening system according to claim 1, **characterised in that** in the installed state a spacer sleeve (12) is arranged between the screwing element (7) and the original loading floor (2), whose height is dimensioned slightly greater than a fastening collar of the holding element (3) located between the screwing element (7) and the original loading floor (2).

4. Fastening system according to claim 3, **characterised in that** the spacer sleeve (12) is formed in one piece on the screwing element (7) as a spacer collar.

5. Fastening system according to any one of claims 1 to 4, **characterised in that** the spacer sleeve (12) has a disc-shaped spacer body (18) and a sleeve part (19) adjoining upwards from the spacer body (18).

6. Fastening system according to claims 1 to 5, **characterised in that** the holding element (3) has at least one fastening point (20) for fixing a fastening fitting according to VDI [Association of German Engineers] 27C0 and/or DIN/ISO 75410 and/or ISO 27956.

7. Fastening system according to claim 6, **characterised in that** the fastening point (20) is part of an undercut groove (21) introduced in the base body (8) and bar (9) along the bar central axis.

8. Fastening system according to claim 7, **characterised in that** on the floor of the groove (21) an oblong-shaped recess (13) is introduced with two regions (22, 23) different in width which extends to the underside (16) of the holding element (3).

## Revendications

1. Système de fixation servant à immobiliser une plaque de plancher supplémentaire (1) faisant partie du système de fixation au niveau de filetages de fixation dans le plancher de chargement d'origine (2) d'un véhicule et servant à arrimer un chargement au moyen de raccords de fixation correspondants avec un élément de maintien (3), lequel est disposé dans une ouverture étagée de la plaque de plancher supplémentaire (1), dans lequel l'ouverture (4) présente une première zone d'ouverture (5) plus grande en diamètre et une deuxième zone d'ouverture (6) plus petite en diamètre, et avec un élément de vissage (7), lequel est adapté pour fixer l'élément de maintien (3) au niveau d'un filetage de fixation présent côté fabricant dans le plancher de chargement d'origine (2) du véhicule, dans lequel l'élément de maintien (3) présente dans l'état monté un corps de base (8), qui est en forme de disque éloigné du plancher de chargement d'origine (2) et avec lequel l'élément de maintien (3) est disposé dans la première zone d'ouverture (5) de la plaque de plancher supplémentaire (1), à laquelle se raccorde une entretoise (9) allongée, laquelle fait saillie dans l'état monté vers le bas en direction du plancher de chargement d'origine (2) et est placée dans la deuxième zone d'ouverture (6) de la plaque de plancher supplémentaire (2),
**caractérisé en ce que**
un léger espacement est présent entre le côté inférieur (16) du corps de base (8) et le plancher (17) de la première zone d'ouverture (5) d'une part et la surface périphérique (14) du corps de base (8) et la surface intérieure (15) de la paroi latérale de la première zone d'ouverture (5) d'autre part après le montage du système de fixation.

2. Système de fixation selon la revendication 1,
**caractérisé en ce que**
l'espacement se situe dans la plage de 0,1 - 1,5 mm.

3. Système de fixation selon la revendication 1,
**caractérisé en ce que**
dans l'état monté, entre l'élément de vissage (7) et le plancher de chargement d'origine (2), est disposée une douille d'écartement (12), dont la hauteur présente une dimension légèrement plus grande qu'un collet de fixation, se trouvant entre l'élément de vissage (7) et le plancher de chargement d'origine (2), de l'élément de maintien (3).

4. Système de fixation selon la revendication 3,
**caractérisé en ce que**
la douille d'écartement (12) est réalisée d'un seul tenant au niveau de l'élément de vissage (7) sous la forme d'un collet d'écartement.

5. Système de fixation selon l'une quelconque des revendications 1 - 4,
**caractérisé en ce que**
la douille d'écartement (12) présente un corps d'écartement (18) en ferme de disque et une partie de douille (19) se raccordant vers le haut depuis le corps d'écartement (18).

6. Système de fixation selon les revendications 1 - 5,
**caractérisé en ce que**
l'élément de maintien (3) présente au moins un point de fixation (20) servant à immobiliser un raccord de fixation selon la norme VDI 2700 et/ou la norme DIN/ISO 75410 et/ou la norme ISO 27956.

7. Système de fixation selon la revendication 6,
**caractérisé en ce que**
le point de fixation (20) fait partie intégrante d'une rainure (21) contre-dépouillée pratiquée dans le corps de base (8) et l'entretoise (9) le long de l'axe médian d'entretoise.

8. Système de fixation selon la revendication 7,
**caractérisé en ce que**
est pratiqué, au niveau du fond de la rainure (21), un évidement (13) en forme de trou allongé, qui comporte deux zones (22, 23) différentes dans la largeur et qui s'étend jusqu'au côté inférieur (16) de l'élément de maintien (3).
